(19)

Europäisches
Patentamt

European
Patent Office

Office européen
des brevets

(11)  **EP 3 922 382 A1**

(12)  **EUROPEAN PATENT APPLICATION**

(43) Date of publication:
**15.12.2021 Bulletin 2021/50**

(21) Application number: **20472016.3**

(22) Date of filing: **18.11.2020**

(51) Int Cl.:
*B23B 29/04* (2006.01)     *B23B 31/107* (2006.01)
*B23B 31/20* (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **09.06.2020 BG 499520**

(71) Applicant: **EUROEXPORT GB EOOD**
**5343 s. Lesicharka (BG)**

(72) Inventors:
• **Andreeva, Greta Atanasova**
  **5300 Gabrovo (BG)**
• **Andreev, Tinko Iliev**
  **5300 Gabrovo (BG)**

(74) Representative: **Georgieva, Ivanka Emilova**
**37 "Oborishte" Str., 1 fl., 5 apt.**
**1504 Sofia (BG)**

(54)  **SYSTEM FOR QUICK CHANGE ATTACHMENT OF TOOLS**

(57)    The invention concerns a system for quick change attachment of tools, which will find application in the field of industry and more particularly in the field of gripping of metalworking tools.

The system for quick change attachment of tools comprising holder (1) and modular head (3). In the holder (1) is bored a stepped bore (2) with a cylindrical section (2.1) and a profile section (2.2). From the other side of the modular head (3) is shaped a stepped connecting element (4) with a cylindrical section (4.1) and a profile section (4.2). The modular head (3) is attached to the holder (1), as the stepped connecting element (4) of the modular head (3) is fitted with a clearance in the stepped bore (2) of the holder (1). The profile section (2.2) of the holder (1) has a shape of a concave epitrochoidal cone, and the profile section (4.2) of the modular head (3) has a shape of a convex epitrochoidal cone. The form of the cross-section of each of the profile sections (2.2, 4.2) and respectively of the holder (1) and modular head (3) is in a shape of clover leaf. The profile sections (2.2, 4.2) in turn have conical surfaces with three outer radii (Ra) and three inner radii (Ri), as the conical surfaces themselves are three convex and three concave surfaces. The outer radii (Ra) are larger than the inner radii (Ri) and the inner radii (Ri) have a smaller central angle ($\varphi i$) vs the central angle ($\varphi a$) of the outer radii (Ra). In the holder (1) is formed a transverse threaded bore (5.1) for placing of a set screw (5) with a conical tip, which can be clamped in an additional conical bore (5.2), formed in the cylindrical section (4.1) of the stepped connecting element (4).

Fig. 2

EP 3 922 382 A1

## Description

## Technical Field

The invention relates to a system for quick change attachment of tools, which will find application in the field of industry and more particularly in the field of gripping of metalworking tools.

## Background Art

From EP0294348 is known a system for quick change attachment of tools, comprising a holder, which has a surrounding surface and a basic lobe, in which a stepped bore with a cylindrical section and a profile section and a modular head is formed, so that the modular head has a surrounding surface, a working surface and a basic lobe, wherein is shaped a stepped connecting element with a cylindrical section and a profile section. The modular head is attached to the holder, as the stepped connecting element of the modular head is fitted with a clearance in the stepped bore of the holder, so that the cylindrical section of the stepped connecting element is placed in the cylindrical section of the stepped bore, and the profile section of the stepped connecting element is placed in the profile section of the stepped bore. The shape of the profile section of the holder is corresponding to the shape of the profile section of the modular head. Each of the profile sections has conical surfaces with three outer radii and three inner radii. In the surrounding section of the holder is formed a transverse threaded bore for placing of a set screw with a conical tip, which can be clamped in an additional conical bore, formed in the cylindrical section of the stepped connecting element.

In EP0294348 is disclosed a variant embodiment (fig. 1a), wherein the profile section of the holder has a shape of concave polygonal cone, and the profile section of the modular head has a shape of convex polygonal cone. The shape of the profile section of the holder is corresponding to the shape of the profile section of the modular head. The profile sections have six convex conical surfaces with three outer radii Ra (tangents to Da) and three internal radii Ri (tangents to Di), so that the outer radii Ra are smaller than the inner radii Ri. The cross-section of each of the profile sections of the holder and modular head respectively, has a polygonal profile type "Capto" according to the ISO 26623:2014, as the project base of the polygonal profile is adopted from DIN 32711. In the variant embodiment, known from EP0294348, the contact surface, which is bearing the torque load is providing a crush resistance, but the arm of applying of the resultant torque force is shorter, which is resulting to increased torsional stress.

## Disclosure of Invention

The object of the invention is to create a system for quick change attachment of tools, having an increased load capacity under the impact of a torque, due to the cutting forces during processing by metalworking machines.

The object of the invention is accomplished by a system for quick change attachment of tools, which is comprising a holder, having a surrounding surface and a basic lobe, in which is formed a stepped bore with a cylindrical section and a profile section and a modular head, so that the modular head has a surrounding surface, a working surface and a basic lobe, wherein is shaped a stepped connecting element with cylindrical section and profile section. The modular head is attached to the holder. The stepped connecting element of the modular head is fitted with a clearance in the stepped bore of the holder, so that the cylindrical section of the stepped connecting element is placed in cylindrical section of the stepped bore, and the profile section of the stepped connecting element is placed in the profile section of the stepped bore. The shape of the profile section of the holder is corresponding to the shape of the profile section of the modular head. Each of the profile sections has conical surfaces with three outer radii and three inner radii. In the surrounding section of the holder a transverse threaded bore for placing of a set screw with a conical tip is provided, which can be clamped in an additional conical bore, formed in the cylindrical section of the stepped connecting element.

According to the invention, the profile section of the holder has a shape of a concave epitrochoidal cone, and the profile section of the modular head has a shape of a convex epitrochoidal cone. The shape of the cross-section of each of the profile sections of the holder and modular head respectively is in a shape of clover. The conical surfaces are three convex surfaces and three concave surfaces, as the outer radii are larger than the internal radii and the internal radii have a smaller central angle vs the central angle of the outer radii.

In one embodiment of the system for quick change attachment of tools, according to the invention, the holder and the modular head have a cylindrical shape. On the working surface of the modular head is formed a conical bore, in which a collet can be attached. On the surrounding surface of the modular head, from the side of the working surface, is shaped a cylindrical metric thread in which a nut can be tightened.

In another embodiment of the system for quick change attachment of tools, according to the invention, the holder and the modular head has a prismatic shape. The working surface of the modular head is shaped in which a turning tool can be attached.

The system for quick change attachment of tools has an epitrochoidal profile of the attachment, wherein the contacting surface is smaller, that reduces the torque load of torsion. The lack of convex connecting cones at the epitrochoidal profile is a technological advantage, as the system does not require precise contact between the modular head and the holder, and this gives more freedom in the accuracy of execution and makes it possible to provide a good contact spot and in an assembly with greater clearance. The mutual arrangement of the conical surfaces is precised only between three axisymmetric cones.

**Brief Description of Drawings**

In more details, the system for quick change attachment of tools, according to the present invention, is clarified on the accompanying figures, wherein

Figure 1a represents the cross-section shape of polygonal profile in polygonal profile type "Capto" according to the ISO 26623:2014, known from EP0294348, while the figure 1b represents the cross-section shape of clover epitrochoidal profile;

Figure 2 represents the axonometric view of an embodiment;

Figures 3a and 3b represent an embodiment of the system for quick-change attachment of tools with a cylindrical tail part;

Figures 4a and 4b represent another embodiment of the system for quick-change attachment of tools for turning tools.

**Embodiments of the Invention**

In the appended figures (2, 3a, 3b, 4a и 4b) is shown an exemplary embodiment, according to the invention, of the system for quick change attachment of tools, comprising a holder 1 and a modular head 3. On one side the holder 1 has a surrounding surface 1.1 and a basic lobe 1.2, wherein in the basic lobe 1.2 a stepped bore 2 is formed with a cylindrical section 2.1 and a profile section 2.2. On the other side the modular head 3 has a surrounding surface 3.1, a working surface 3.2 and a basic lobe 3.3, wherein on the basic lobe 3.3 a stepped connecting element 4 is formed with a cylindrical section 4.1 and a profile section 4.2. The modular head 3 is attached to the holder 1, so that the stepped connecting element 4 of the modular head 3 is fitted with a clearance in the stepped bore 2 of the holder 1. In particular the cylindrical section 4.1 of the stepped connecting element 4 is placed in the cylindrical section 2.1 of the stepped bore 2, and the profile section 4.2 of the stepped connecting element 4 is placed in the profile section 2.2 of the stepped bore 2.

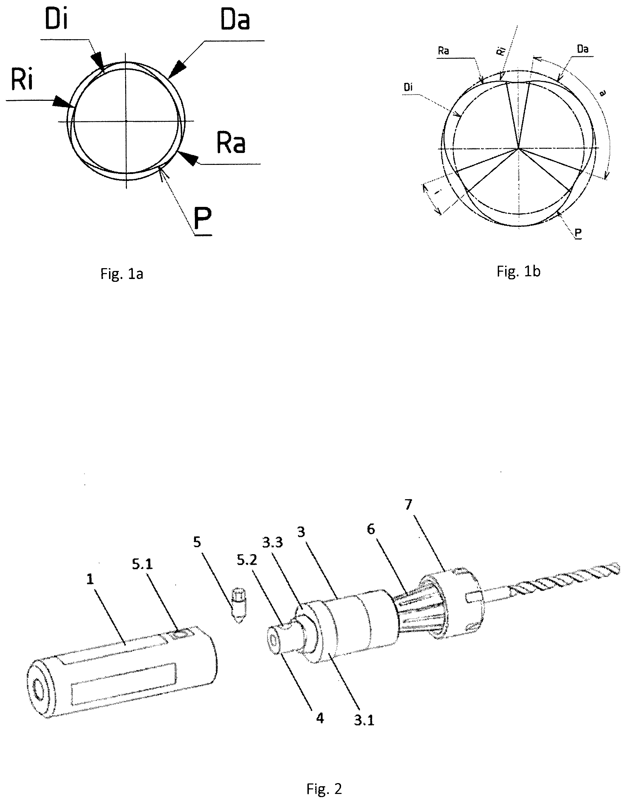

The profile section 2.2 of the holder 1 has a shape of a concave epitrochoidal cone, and the profile section 4.2 of the modular head 3 has a shape of a convex epitrochoidal cone. The shape of the profile section 2.2 of the holder 1 is corresponding to the form of the profile section 4.2 of the modular head 3. The shape of the cross-section of each of the profile sections 2.2, 4.2 respectively of the holder 1 and of the modular head 3 is in a shape of clover (fig. 1b). The profile sections 2.2, 4.2 in turn have conical surfaces with three outer radii Ra and three inner radii Ri, so that the conical surfaces consist of three convex and three concave surfaces. The outer radii Ra are larger than the internal radii Ri and the internal radii Ri have a smaller central angle φi than the central angle φa of the outer radii Ra.

In the surrounding surface 1.1 of the holder 1 a transverse threaded bore 5.1 is formed for fitting a locking screw 5 with a conical tip, which can be tightened in additional conical bore 5.2, shaped in the cylindrical section 4.1 of the stepped connecting element 4.

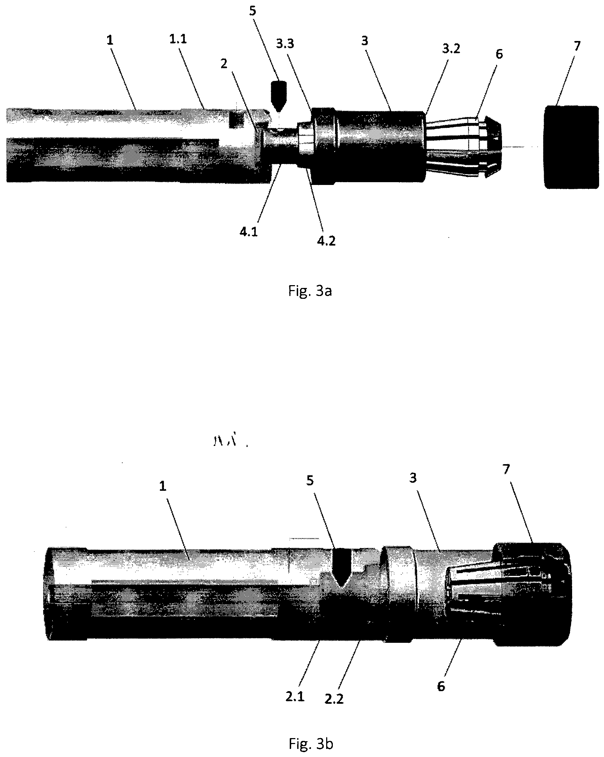

In one variant embodiment of the system for quick change attachment of tools (fig. 3a and 3b), according to the invention, the holder 1 and the modular head 3 has a cylindrical shape. In the working surface 3.2 of the modular head 3 a conical bore is provided, in which a collet 6 can be attached. On the surrounding surface 3.1 of the modular head 3, from the working surface 3.2, is shaped a cylindrical metric thread, in which a nut 7 can be tightened.

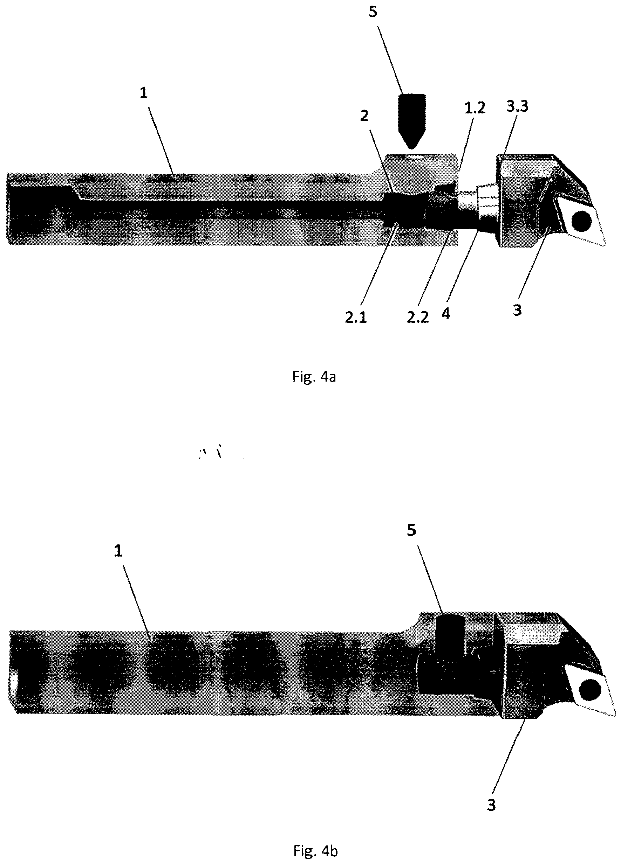

In another variant embodiment of the system for quick change attachment of tools (fig. 4a and 4b), according to the invention, the holder 1 and the modular head 3 have a prismatic shape. The working surface 3.2 of the modular head 3 is shaped in such a way, that a turning tool can be attached.

**Industrial Applicability**

In mechanical processing of metal assembly, the system for quick change attachment of tools is subjected to forces of different direction and magnitude, resulting from the process of formation and separation of the chips. Under the action of the applied external force, when turning or drilling, the cutting edge of the tool creates compressive stresses, which after exceeding the shear strength of the workpiece metal cause the destruction of the metal at the point of pressure. The cutting forces and moments of the workpiece metal cause reactions which are transferred to the attachments of the tools, namely:

- Main cutting force on radially applied tool (when turning);
- Cutting force on axially applied tool (when drilling);
- Feeding force on axially applied tool;
- Required total gripping force (without considering the effects of angular speed);
- Centrifugal force on the grips- loss of gripping force;
- Initial gripping force with the chuck stationary;

These forces and moments are transferred to the attachments of the instruments. The required gripping force during processing can be determined relatively accurately by the parameters of the workpiece, the tool feed, and the cutting depth. The main cutting force Fs is calculated by the formula:

$$F_s = s*t*k_c$$

wherein:

  s = feed;
  t = cutting depth;
  $k_c$ = specific cutting force.

The common between the technical solution disclosed in the present invention and the standard polygonal profile systems, such as that cited in EP0294348, is as follows:

• Both are made of metal with the same strength properties and heat treatment hardness;
• Both have commensurate overall dimensions, which determines the uniformity of the metal-ceramic plates attached through them, and this results to the same range of cutting angles, feeds and cutting depth.
• the torque resistance is borne by three radii of the profile, the forming of these radii having the same slope, which makes their conical surfaces similar.

The technical solution of the present invention also has significant differences from standard systems with polygonal profile, as the cited in EP0294348, which result mainly from the way by which the modular head 3 is attached to the holder 1, namely:

• At the polygonal profile, the contacting surface, which bears the torque load is larger, which provides greater crush resistance, but the arm of application of torque-equivalent force is shorter. This results in higher torsional stresses;
• At the epitrochoidal profile, the contacting surface is smaller. This results in lower crush resistance, but the torque load of torsion is weaker, as the arm of applying the force equal to the torque is greater;
• The value of the contact point between the tool module and the holder 1 largely depends on the clearance fit between the conical surfaces of the modular head 3 and the conical surfaces of the holder 1. The clearance fit is mandatory for the joint to be quick-changeable, while ensuring self-centering. To be precise, the assembly of the polygonal profile requires a higher accuracy of execution (g6 / H6). This in turn results in high requirements for the relative position of the conical surfaces for each element of the attachment system. The lack of convex connecting cones at the epitrochoidal profile is a technological advantage. The concave conical surfaces do not require precise contact between the modular head 3 and the holder 1, which provides more freedom in the accuracy of execution and is configured to ensure a good contact point even with clearance fit (g6 / H7).

• The biggest technological advantage of the epitrochoidal profile is that the relative position of the conical surfaces is precised only between three axisymmetric cones and not between six as in the polygonal profile.

For better understanding of the application of the invention, two of the most common uses of the system for quick change attachment of tools are described on the figures. In one exemplary embodiment, the attachment of tools with a cylindrical tail part is shown. In this embodiment the cylindrical section 4.1 of the modular head 3 enters the cylindrical section 2.1 with the corresponding diameter into the holder 1. Therewith it achieves alignment of the main axes of the modular head 3 and the holder 1. The convex epitrochoidal cone of the modular head 3 is oriented into the concave epitrochoidal cone of the holder 1 so, that the transverse threaded bore 5.1 is coaxial to the additional conical bore 5.2, and thereby the possibility to tighten by set screw 5 with a conical tip is created. Tightening of the conical set screw 5 results in pulling of the basic lobe 3.3 of the modular head 3 to the basic lobe 1.2 of the holder 1. Thus, the frontal basing of the modular head 3 to the holder 1 is ensured. In the modular head 3 a cutting tool with a cylindrical tail is pre-attached, which is attached to it by means of the collet 6 and the nut 7. This is done by inserting the inner teeth of the nut 7 into the outer channel of the collet 6 and through the spring properties of the collet 6. This can be done outside the working area of the machine. The collet 6 together with the nut 7 fits in the conical bore of the working surface 3.2 of the modular head 3. The modular head 3 has outer cylindrical metric thread (not shown in the figure) on which the nut 7 is wound. Thus, when a drill, countersink, milling or other tool with a cylindrical tail with a diameter corresponding to the collet 6 is placed in the opening of the collet 6, by tightening the nut 7, it is fixed firmly to the modular head 3. The corresponding collet 6 is selected, depending on the diameter of the cylindrical tails of the tools. The conical dimensions of the collet 6 are the same for every standard size of the modular head 3.

The modular head 3, the collet 6, the nut 7 and the working tool form so called tool module. The tool module is attached in the working area of the machine by quick change attachment to the holder 1. The holder 1 is steady and stationary attached to a basic mount of the machine. The tool module enters with the stepped contacting element 4 in the stepped bore 2 of the holder 1 so that the epitrochoidal conical profile section 4.2 of the modular head 3 is based in the epitrochoidal conical profile section of the holder 1. In this way, the load torque is taken by the outer radii Ra of the epitrochoidal profile. The conical tip of the set screw 5, when it enters in the additional conical bore 5.2 of the modular head 3, is ensuring pressing of the basic lobe 3.3 of the modular head 3 to the basic lobe 1.2 of the holder 1. This means that the assembly of the two conical epitrochoidal profiles is having a fit clearance, which prevents jamming.

The other embodiment is providing an attachment of turning tools, which is preferably a metal-ceramic plate with rhombic or other known shape. The turning tool is attached in a standard way by a base to the working surface 3.2 of the modular head 3. For the correct orientation of the modular head 3 to the holder 1 to be ensured, it is required the cylindrical section 4.1 of the modular head 3 to enter in the cylindrical section 2.1 with corresponding diameter of the holder 1. The alignment of the cylindrical section 4.1 of the modular head 3 and the cylindrical section 2.1 with the corresponding diameter in the holder 1 is ensuring matching of the main axes at the assembly. The epitrochoidal convex cone of the profile section 4.2 of the stepped connecting element 4 of the modular head 3 is oriented in the epitrochoidal concave cone of the profile section 2.2 of the stepped bore 2 of the holder 1 so that a tightening with the set screw 5 to be possible. The tightening by the set screw 5 results in pulling of the basic lobe 3.3 of the modular head 3 to the basic lobe 1.2 of the holder 1. Thus, the frontal basing of the modular head 3 to the holder 1 is provided.

Depending on the shape and cutting angles of the turning tools, modular heads 3 of different configurations are constructed. The attachment of the modular head 3 on a prismatic stationary holder 1 is carried out as follows:

- The prismatic holder 1 or a group of similar holders 1 are attached steady on a mount, which is placed on the surface of the support base in the processing area of the machine;
- The basic lobe 1.2 of the holder 1 is strictly perpendicular to the walls of the surrounding surface 1 of the prism of his body. Since there is a technological radius between the convex epitrochoidal conical profile and the basic lobe 1.2, a cylindrical release is made in the basic lobe 1.2 of the holder 1. As a result, a tight fit of both lobes is ensured. The profile section 2.2 with epitrochoidal profile from the stepped bore 2 of the holder 1 and the centering bore in the holder are strictly coaxial, with priority given to the larger outer radii Ra. The same requirement applies to the convex epitrochoidal conical profile of the profile section 4.2 of the stepped connecting element 4 of the modular head 3, wherein the larger outer radii Ra are also a priority;
- The modular head 3 provides precised orientation of the cutting edge of the turning tool (usually a metal-ceramic plate) towards the prismatic holder 1 and therefore towards the surface of the support base of the machine;
- The fitting of the basic lobes 1.2, 3.3 provides the position of the tip of the cutting edge in relation to the coordinate system of the machine;
- The epitrochoidal profile of the system for quick change attachment of tools ensures unambiguous orientation of different modular heads 3 to the respective prismatic holders 1.

**Claims**

1. A system for quick change attachment of tools, comprising a holder (1), having a surrounding surface (1.1) and a basic lobe (1.2), in which a stepped bore (2) is formed with cylindrical section (2.1) and profile section (2.2) and modular head (3), which has a surrounding surface (3.1), working surface (3.2) and basic lobe (3.3), on which is shaped stepped connecting element (4) with a cylindrical section (4.1) and profile section (4.2), wherein the modular head (3) is attached to the holder (1), so that the stepped connecting element (4) of the modular head (3) is fitted with a clearance in the stepped bore (2) of the holder (1), so that the cylindrical section (4.1) of the stepped connecting element (4) is placed in the cylindrical section (2.1) of the stepped bore (2), and the profile section (4.2) of the stepped connecting element (4) is placed in the profile section (2.2) of the stepped bore (2), so that the shape of the profile section (2.2) of the holder (1) is corresponding to the shape of the profile section (4.2) of the modular head (3) and each of the profile sections (2.2, 4.2) has conical surfaces with three outer radii (Ra) and three inner radii (Ri), and in the surrounding surface (1.1) of the holder (1) a transverse threaded bore (5.1) is formed for placing of a set screw (5) with a conical tip, which is clamped in an additional conical bore (5.2), shaped in the cylindrical section (4.1) of the stepped connecting element (4) **characterized in that** the profile section (2.2) of the holder (1) is in a shape of a concave epitrochoidal cone, and the profile section (4.2) of the modular head (3) is in a shape of a convex epitrochoidal cone, and the shape of the cross-section of each of the profile sections (2.2, 4.2) of the holder (1) and the modular head (3) respectively are in a shape of clover, wherein the conical surfaces are three convex surfaces and three concave surfaces, as the outer radii (Ra) are larger than the internal radii (Ri) and the internal radii (Ri) have a smaller central angle ($\varphi i$) vs the central angle ($\varphi a$) of the outer radii (Ra).

2. The system for quick change attachment of tools, according to claim 1, **characterized in that** the holder (1) and the modular head (3) have a cylindrical form, whereby in the working surface (3.2) of the modular head (3) a conical bore is formed, configured for attaching of a collet (6), and on the surrounding surface (3.1) of the modular head (3), from the side of the working surface (3.2), a cylindrical metric thread is shaped, configured for tightening of a nut (7).

3. The system for quick change attachment of tools, according to claim 1, **characterized in that** the holder (1) and the modular head (3) have a prismatic shape, and the working surface (3.2) of the modular head (3) is configured for attaching of a turning tools.

Di    Da

Ri

Ra

P

Fig. 1a

Ra    Ri    Da

Di

a

l

P

Fig. 1b

7

1    5.1    5    5.2    3.3    3    6    7

4    3.1

Fig. 2

Fig. 3a

Fig. 3b

Fig. 4a

Fig. 4b

Europäisches
Patentamt

European
Patent Office

Office européen
des brevets

# EUROPEAN SEARCH REPORT

Application Number

EP 20 47 2016

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | DE 10 2017 118501 A1 (MAS GMBH [DE]) 14 February 2019 (2019-02-14) * paragraph [0074] * * figures 1-3 * | 1-3 | INV. B23B29/04 B23B31/107 B23B31/20 |
| Y | DE 195 22 452 C1 (HORN P HARTMETALL WERKZEUGFAB [DE]) 23 May 1996 (1996-05-23) * column 4, lines 27-44 * * figures 1-3 * | 1-3 | |
| A | US 2018/353232 A1 (BARTH JÜRGEN [DE] ET AL) 13 December 2018 (2018-12-13) * paragraphs [0116] - [0124] * * figures 14, 15 * | 1 | |
| A | US 2015/290718 A1 (FREYERMUTH ALAIN [FR] ET AL) 15 October 2015 (2015-10-15) * paragraphs [0026], [0027] * * figures 1-4 * | 1 | |
| A | US 2015/375309 A1 (BURTSCHER PETER [AT] ET AL) 31 December 2015 (2015-12-31) * paragraph [0057] * * figures 1-16 * | 1 | TECHNICAL FIELDS SEARCHED (IPC) A61B B23B B23C F16D |
| A | EP 1 820 987 A2 (COPERION WAESCHLE GMBH & CO KG [DE]) 22 August 2007 (2007-08-22) * figures 1-18 * | 1 | |
| A | US 2008/159808 A1 (LOUSTANAU JEAN-GERARD [FR] ET AL) 3 July 2008 (2008-07-03) * paragraph [0017] * * figures 2-4 * | 1 | |
| A | EP 2 301 696 A1 (ESA EPPINGER GMBH [DE]) 30 March 2011 (2011-03-30) * paragraph [0018] * * figures 1-12 * | 2 | |

The present search report has been drawn up for all claims

| Place of search | Date of completion of the search | Examiner |
|---|---|---|
| The Hague | 4 May 2021 | Schäfer, Lisa |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

.................................................................................................

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 20 47 2016

This annex lists the patent family members relating to the patent documents cited in the above-mentioned European search report.
The members are as contained in the European Patent Office EDP file on
The European Patent Office is in no way liable for these particulars which are merely given for the purpose of information.

04-05-2021

| Patent document cited in search report | Publication date | Patent family member(s) | Publication date |
|---|---|---|---|
| DE 102017118501 A1 | 14-02-2019 | DE 102017118501 A1 | 14-02-2019 |
| | | EP 3668668 A1 | 24-06-2020 |
| | | US 2020198020 A1 | 25-06-2020 |
| | | WO 2019034620 A1 | 21-02-2019 |
| DE 19522452 C1 | 23-05-1996 | NONE | |
| US 2018353232 A1 | 13-12-2018 | CN 104602622 A | 06-05-2015 |
| | | DE 102012108267 A1 | 06-03-2014 |
| | | EP 2892440 A1 | 15-07-2015 |
| | | JP 6449769 B2 | 09-01-2019 |
| | | JP 2015527148 A | 17-09-2015 |
| | | RU 2015112136 A | 27-10-2016 |
| | | US 2015238241 A1 | 27-08-2015 |
| | | US 2018353232 A1 | 13-12-2018 |
| | | WO 2014037134 A1 | 13-03-2014 |
| US 2015290718 A1 | 15-10-2015 | BR 112015009311 A2 | 04-07-2017 |
| | | CN 104755203 A | 01-07-2015 |
| | | EP 2911818 A1 | 02-09-2015 |
| | | FR 2997328 A1 | 02-05-2014 |
| | | KR 20150067221 A | 17-06-2015 |
| | | RU 2015119476 A | 20-12-2016 |
| | | US 2015290718 A1 | 15-10-2015 |
| | | WO 2014064393 A1 | 01-05-2014 |
| US 2015375309 A1 | 31-12-2015 | AT 13498 U1 | 15-01-2014 |
| | | CN 105142833 A | 09-12-2015 |
| | | EP 2958693 A1 | 30-12-2015 |
| | | ES 2734351 T3 | 05-12-2019 |
| | | PL 2958693 T3 | 29-11-2019 |
| | | US 2015375309 A1 | 31-12-2015 |
| | | WO 2014127391 A1 | 28-08-2014 |
| EP 1820987 A2 | 22-08-2007 | AT 475812 T | 15-08-2010 |
| | | DE 102006007476 A1 | 23-08-2007 |
| | | EP 1820987 A2 | 22-08-2007 |
| US 2008159808 A1 | 03-07-2008 | CN 1699001 A | 23-11-2005 |
| | | DE 102005022078 A1 | 09-02-2006 |
| | | US 2006024130 A1 | 02-02-2006 |
| | | US 2008159808 A1 | 03-07-2008 |
| EP 2301696 A1 | 30-03-2011 | DE 102009042665 A1 | 19-05-2011 |
| | | EP 2301696 A1 | 30-03-2011 |
| | | US 2011068545 A1 | 24-03-2011 |

EPO FORM P0459

For more details about this annex : see Official Journal of the European Patent Office, No. 12/82

page 1 of 2

**ANNEX TO THE EUROPEAN SEARCH REPORT
ON EUROPEAN PATENT APPLICATION NO.**

EP 20 47 2016

This annex lists the patent family members relating to the patent documents cited in the above-mentioned European search report.
The members are as contained in the European Patent Office EDP file on
The European Patent Office is in no way liable for these particulars which are merely given for the purpose of information.

04-05-2021

| Patent document cited in search report | Publication date | Patent family member(s) | Publication date |
|---|---|---|---|
| ----------------------------------------------------------------------- | | | |

EPO FORM P0459

For more details about this annex : see Official Journal of the European Patent Office, No. 12/82

page 2 of 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0294348 A